Europäisches Patentamt

European Patent Office

Office européen des brevets

(11) Publication number: **0 456 160 A1**

## (12) EUROPEAN PATENT APPLICATION

(21) Application number: 91107320.3

(22) Date of filing: 04.05.91

(51) Int. Cl.5: **A61J 9/00**, B65D 25/56

(30) Priority: **08.05.90 IL 94325**

(43) Date of publication of application:
**13.11.91 Bulletin 91/46**

(84) Designated Contracting States:
**DE FR GB IT SE**

(71) Applicant: **CONSTANZA 330 LTD.**
**P.O.Box 5815**
**Beer-Sheva 84156(IL)**

(72) Inventor: **Luzzatto, Kfir**
**20, Oren Street**
**Omer(IL)**

(74) Representative: **Michelotti, Giuliano et al**
**c/o SAIC BREVETTI S.r.l. Viale Bianca Maria**
**15**
**I-20122 Milano(IT)**

(54) **Feeding bottle.**

(57) A feeding bottle (6) comprises a plurality of indication marks (11,11',11''), each of the said indication marks (11,11',11'') showing the intersection of an imaginary plane (7), substantially parallel to the ground, with the body of the feeding bottle (6) at different tilt angles. The bottle (6) permits to read the amount of liquid remaining, without taking the nipple out of the baby's mouth.

Fig 7

## Fieldof The Invention

The present invention relates to a feeding bottle for infants. More particularly, the invention relates to a feeding bottle which can be used for controlled and non-interrupted feeding.

## Background of The Invention

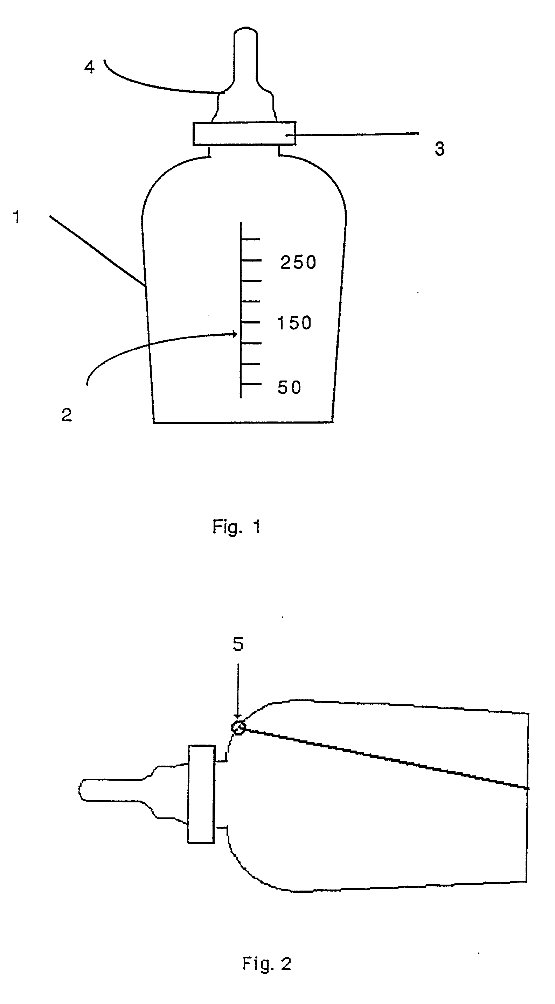

Feeding bottles are normally employed to feed small children, during their first weeks and months after birth, and are normally of the type schematically shown in Fig. 1, including a substantially cylindrical body 1, provided with level indicator 2, a cap 3 provided with a teat 4, through which milk or other liquid to be fed to the infant flows. The problem when bottle-feeding, which is well known to mothers, particularly during the first months, is that feeding must be stopped at intervals to cause the baby to expell air swallowed, otherwise it may regurgitate its entire portion. However, a severe problem is that, while feeding, there is no means to know what is the volume of liquid already taken by the baby, and therefore it is necessary to stop feeding often, to bring the bottle to its vertical position and to check the scale 2 of Fig. 1, to find out whether the time has come to stop the feeding. Thus, the feeding of the baby stops several times unnecessarily, which often causes it to refuse additional feeding, or at least to render the feeding operation difficult and uncomfortable. Nevertheless, the art has so far not provided means by which it is possible to evaluate the amount of intake by the baby at a given time, during the feeding, thereby avoiding the need for repeated stopping of the feeding operation.

## SUMMARYOF THE INVENTION

It is an object of the present invention to provide a feeding bottle which can be effectively used to control feeding operation, without actually taking the teat out of the mouth of the child, or otherwise stopping the feeding operation.

The feeding bottle according to the invention is characterized in that it comprises on its surface a plurality of indication marks, each of the said indication marks showing the intersection of an imaginary plane, substantially parallel to the ground, with the body of the feeding bottle at different tilt angles, as hereinafter defined, at least some of the said indication marks bearing the indication of the residual volume, defined as the total volume of the feeding bottle found below the imaginary intersecting plane.

The indication marks may lie on lines which do not intersect one another on the bottle body, but this may render it more difficult to correctly identify the indication marks and to interpolate between different lines. According to a preferred embodiment of the invention, therefore, the lines on which the indication marks lie have a common origin located on the bottle body or teat. Preferably, the common origin is located in the vicinity of what will be termed herein the "full point". This point is, as shown in Fig. 2, the area indicated by numeral 5. When feeding from a bottle it is necessary to take care that the teat is full with the fluid which is to be administered to the baby. Normally, therefore, when feeding from a bottle care will be taken to have some fluid reach up to a point more or less around the point schematically indicated by numeral 5, thus making sure that the whole teat is filled with liquid. Of course, it is possible - and it may be desirable - to provide a reduced cross-section of the bottle in the region of the full point, as this will increase the scale sensitivity and will permit to obtain a better monitoring of the volume when the bottle contains a small residual volume of liquid.

## DETAILEDDESCRIPTION OF THE INVENTION

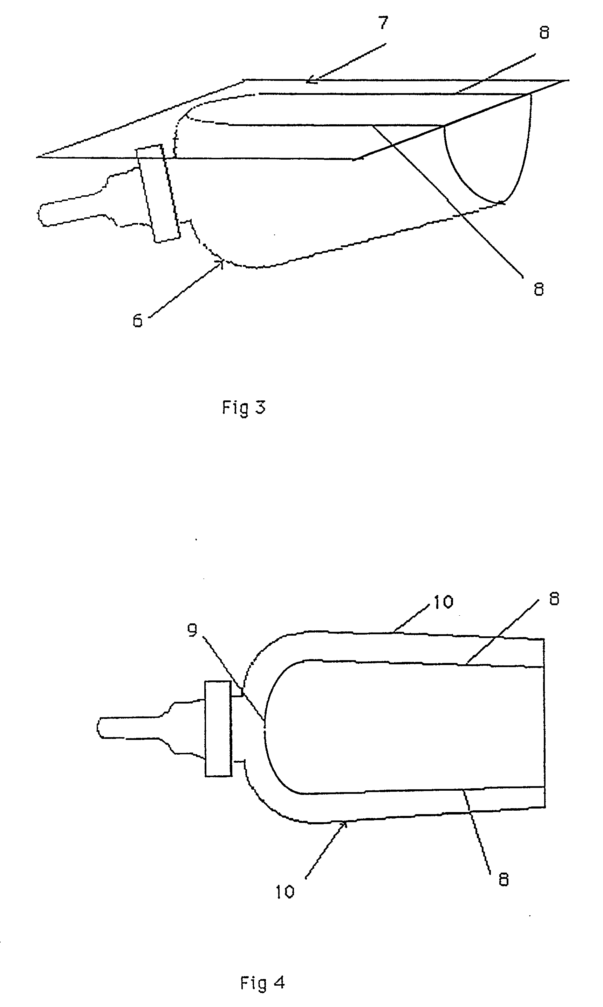

The invention will be further illustrated with reference to Figs. 3 to 9.

Turning now to Fig. 3, this is a schematical view of a bottle 6 with an intersecting plane 7. It can be seen that the plane substantially intersects with the bottle along two lines, viz. line 8 and line 8'. According to a preferred embodiment of the invention, the indication marks are provided on both line 8 and line 8', so that they can be used both by right- and left-handed persons. Of course, on both lines the same residual volume will be indicated.

In a preferred embodiment of the invention, the indication lines will be substantially continuous, as schematically shown in Fig. 4 which is a top view of the bottle of Fig. 3, the upper portion of a bottle having been removed. Here the lines 8 and 8' merge at the origin indicated by numeral 9. The intersection of plane 7 of Fig. 3, occurring above the middle line of the bottle, leaves a section which is smaller than the maximal diameter of the bottle, so that outer walls 10 are seen below the intersection line. As can be seen, the intersection creates a line which has substantially the shape of a parabola. Thus, in one embodiment of the invention the indication lines will consist of a set of parabolas having a common origin at 9.

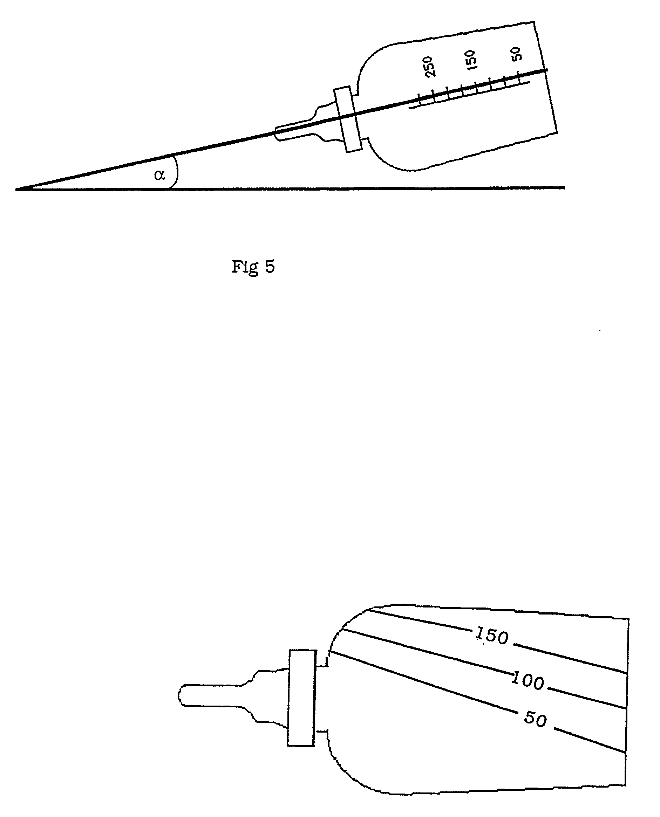

Fig. 5 illustrates the tilt angle, $\alpha$. This is the angle that the axis of symmetry of the bottle passing through the tip of the teat meet with the horizontal plane. As will be apparent to a skilled mother, the tilt angle will increase continuously as the bottle empties itself, in order to maintain the "full point" essentially in the same region, and thereby keeping the teat substantially full and providing substantially a constant pressure of the liquid on the nipple.

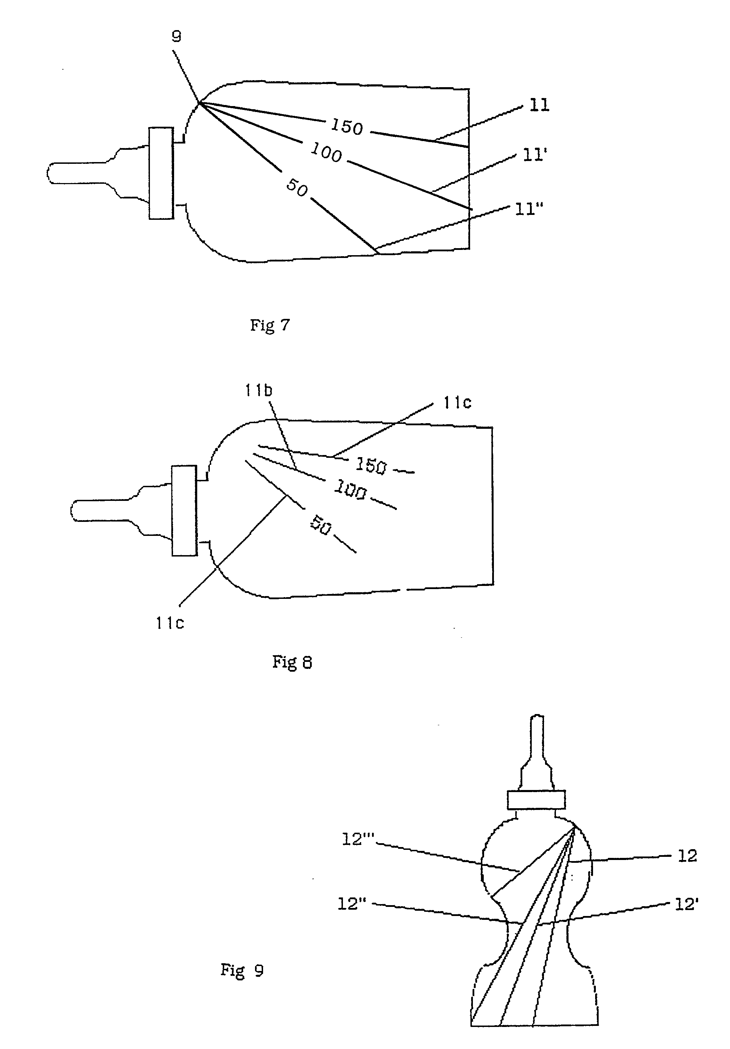

In Fig. 6 there is shown, for the sake of completeness, a bottle according to an embodiment of the invention, in which the indication marks do not originate from a common origin. In Fig. 7, on the other hand, the indication marks 11, 11' and 11" all originate from common origin 9. Thus, as will be easily appreciated, it is very simple to evaluate the volume of liquid remaining in the bottle. First of all, the bottle is brought to a tilt in which the full point is around the origin 9, and then the level of the liquid will coincide with one of the indication lines 11-11", or will be found between two such lines or near one of them. In this situation it will be very easy to interpolate, or to extrapolate, to the correct volume of the residual volume. Thus, it will be readily understood that feeding may be stopped when the residual volume reaches the predetermined value, and it will not be necessary to stop feeding several times to check the residual volume in the bottle.

In order to provide the indication marks 11-11", a simple procedure involves filling the bottle with different volumes of liquid, verifying the volume of liquid found in the bottle in the vertical position, by means of level indicator 2 of Fig. 1 (or by any other means, such as by introducing a known volume of liquid), tilting the bottle so that the edge of the level of liquid is positioned at the full point 9, making this point the origin of the family of lines, imaginary or not, on which the indication marks lie, drawing marks indicative of the level of the liquid, beginning at point 9, and repeating this procedure for different volumes while indicating each time the correct value on the indication marks. The result will be as seen in Fig. 7.

As said, lines 11-11" may be full lines, or only partial markings can be provided, as shown in Fig. 8. In this embodiment of the invention marks 11a-11c will be provided, which are sufficient to define the angle of the liquid in the bottle with respect to its axis of symmetry. Marks 11a-11c of Fig. 8 lie on imaginary lines which correspond to lines 11-11" of Fig. 7. It will be appreciated that many different marks, other than segments of lines can be employed, as long as they can be used to indicate the level of the liquid at a given residual volume.

As will be apparent to the skilled person, the bottle according to the invention need not be perfectly cylindrical or of any other particular shape. The method of evaluating the residual volume applies in each case, no matter what the shape of the bottle is. Commonly employed shapes will include substantially cylindrical, ondulated surface and frusto-conical shapes. One such bottle is shown in Fig. 9, having an ondulated surface. The indication lines 12-12'" will be provided exactly in the same way, but they will have to follow the ondulation of the surface for ease of reference. Alternatively, two or more discontinuous marks, e.g., as in Fig. 8, can be provided.

All the aforesaid description and preferred embodiments have been provided for the purpose of illustration only, and are not intended to constitute a limitation of the invention. Many modifications, e.g., different indication marks, origin points, types of indicators, shapes and types of bottles can be employed, all without exceeding the scope of the invention.

## Claims

1.  A feeding bottle comprising on its surface a plurality of indication marks, each of the said indication marks showing the intersection of an imaginary plane, substantially parallel to the ground, with the body of the feeding bottle at different tilt angles, at least some of the said indication marks bearing the indication of the residual volume, defined as the total volume of the feeding bottle found below the imaginary intersecting plane.

2.  A feeding bottle according to claim 1, wherein the indication marks lie on imaginary lines having a common origin located on the bottle body or teat.

3.  A feeding bottle according to claim 2, wherein the common origin is located in the vicinity of the "full point", as defined in the specification.

4.  A feeding bottle according to any one of claims 1 to 3, wherein the indication marks are provided on both intersection lines of the imaginary plane with the bottle.

5.  A feeding bottle according to claim 4, wherein the indication marks are substantially continuous lines, thereby creating a set of parabola-like indication marks.

6.  A feeding bottle according to any one of claims 1 to 3, wherein the indication marks lie on imaginary lines having a common origin on the bottle body or teat.

7.  A feeding bottle according to any one of the preceding claims, having a substantially cylindrical shape.

8.  A feeding bottle according to any one of claims 1 to 6, having an ondulated surface.

9. A feeding bottle according to any one of claims 1 to 8, having a substantially frusto-conical shape.

10. A feeding bottle according to any one of claims 1 to 9, having a reduced cross-section in the portion which contains the full point.

11. A.method of evaluating the residual volume of liquid in a feeding bottle for infants, while feeding is taking place, comprising the steps of:
1) providing a feeding bottle having on its surface a plurality of indication marks, each of the said indication marks showing the intersection of an imaginary plane, substantially parallel to the ground, with the body of the feeding bottle at different tilt angles, at least some of the said indication marks bearing the value of the residual volume;
2) bringing the bottle to a tilt angle so that the level of the liquid reaches the full point;
3) reading the value of the indication mark coinciding with the level of the residual liquid, or interpolating or extrapolating this value from neighboring indication lines.

250

150

50

Fig. 1

Fig. 2

Fig 3

Fig 4

Fig 5

Fig 7

Fig 8

Fig 9

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-U-8 914 269 (OBERLAND GLAS AG)<br>* the whole document * | 1-3,6,10, 11 | A 61 J 9/00<br>B 65 D 25/56 |
| X | US-A-3 028 983 (BARR)<br>* the whole document * | 1,4,5,11 | |
| X | DE-A-3 145 598 (UMSTAETTER)<br>* the whole document * | 1,4,7,11 | |
| X | US-A-2 514 744 (CIPYAK)<br>* the whole document * | 1,4,9,11 | |
| | | | TECHNICAL FIELDS SEARCHED (Int. Cl.5) |
| | | | A 61 J<br>B 65 D |

The present search report has been drawn up for all claims

| Place of search | Date of completion of search | Examiner |
|---|---|---|
| The Hague | 16 July 91 | BAERT F.G. |